# EUROPEAN PATENT APPLICATION

(11) **EP 1 806 726 A2**
(43) Date of publication of application: **11.07.2007**
(21) Application number: 06121762.6
(22) Date of filing: 04.10.2006
(51) Int. Cl.: G09G 3/34

(54) **Image resolution enhancing apparatus and method**

(30) Priority: 07.01.2006 KR 20060002035
(71) Applicant: Samsung Electronics Co., Ltd., Suwon-si, Gyeonggi-Do (KR)
(72) Inventor: Won, Jong-hwa, Seoul (KR); Choa, Sung-hoon, Seocho-gu Seoul (KR)
(74) Representative: Greene, Simon Kenneth

(57) **Abstract**

An image resolution enhancing apparatus and method are provided. The image resolution enhancing apparatus having a scanner, a synchronous detector, a wave generator, a high voltage amplifier, and a resonant frequency detector, the image resolution enhancer includes: a first multiplier multiplying the resonant frequency of the scanner detected by the resonant frequency detector by the horizontal resolution of a display screen; a first frequency oscillator oscillating at a pixel frequency corresponding to the multiplication result of the first multiplier; and a first pulse generator generating a pulse corresponding to the pixel frequency by the oscillations of the first frequency oscillator and outputting the generated pulse to the wave generator, wherein the wave generator adds the pulse generated by the first pulse generator to the wave to generate a composite wave. The image resolution enhancing apparatus and method can improve the horizontal resolution by driving the micro-mirror of the scanner in consideration of the pixel frequency.

## Description

### BACKGROUND OF THE INVENTION

The present invention relates to resonant driving of a electrostatic capacity micro mirror, and more particularly, to an image resolution enhancer and an image resolution enhancing method for enhancing a horizontal resolution.

To electrostatically drive a micro-mirror, a means for horizontally driving includes a horizontal synchronous detector, a triangle, square or sine wave generator, and a high voltage amplifier for amplifying the wave. A means for vertically driving includes a vertical synchronous detector, a sawtooth wave generator, and a high voltage amplifier for amplifying the wave.

When electrostatic driving a micro-mirror, a horizontal driving voltage such as a triangle, square, or sine wave is applied to the micro-mirror, and a vertical driving voltage such as a step wave is applied to the micro-mirror according to the horizontal synchronization signal.

In the case of a horizontal operation, it is desirable that the micro-mirror be intermittently driven. However, the horizontal operation is designed to cause resonance, so an angle is continuously increased or decreased. Therefore, a spot does not remain in one pixel, and image information or different pixels overlaps. Accordingly, the resolution of an image is reduced.

### SUMMARY OF THE INVENTION

The present invention provides an image resolution enhancing apparatus and method capable of improving horizontal resolution by driving a micro-mirror of a scanner in consideration of a pixel frequency.

According to an aspect of the present invention, there is provided an image resolution enhancing apparatus having a scanner, a synchronous detector, a wave generator, a high voltage amplifier, and a resonant frequency detector, the image resolution enhancer including: a first multiplier multiplying the resonant frequency of the scanner detected by the resonant frequency detector by the horizontal resolution of a display screen; a first frequency oscillator oscillating at a pixel frequency corresponding to the multiplication result of the first multiplier; and a first pulse generator generating a pulse corresponding to the pixel frequency by the oscillations of the first frequency oscillator and providing the generated pulse to the wave generator, wherein the wave generator adds the pulse received from the first pulse generator to the wave to generate a composite waveform.

According to another aspect of the present invention, there is provided an image resolution enhancing apparatus having a scanner, a synchronous detector, a wave generator, a high voltage amplifier, and a resonant frequency detector, the image resolution enhancer including: a second multiplier multiplying the resonant frequency of the scanner detected by the resonant frequency detector by the horizontal resolution of a display screen; a second frequency oscillator oscillating at a pixel frequency corresponding to the multiplication result of the second multiplier; and a second pulse generator generating a pulse corresponding to the pixel frequency by the oscillations of the second frequency oscillator; and a first synthesizer adding the pulse which is generated by the second pulse generator to the wave which is generated by the wave generator and amplified by the high voltage amplifier and outputting the composite waveform to the scanner.

According to another aspect of the present invention, there is provided an image resolution enhancing apparatus having a scanner, a synchronous detector, a wave generator, a high voltage amplifier, and a resonant frequency detector, the image resolution enhancer including: a third multiplier multiplying the resonant frequency of the scanner detected by the resonant frequency detector by the horizontal resolution of a display screen; a third frequency oscillator oscillating at a pixel frequency corresponding to the multiplication result of the third multiplier; and a third pulse generator generating a pulse corresponding to the pixel frequency by the oscillations of the third frequency oscillator; and a second synthesizer adding the pulse generated by the third pulse generator to the wave generated by the wave generator and outputting the composite waveform to the high voltage amplifier.

According to another aspect of the present invention, there is provided an image resolution enhancing method of an image resolution enhancing apparatus having a scanner, a synchronous detector, a wave generator, a high voltage amplifier, and a resonant frequency detector, the method including: multiplying the resonant frequency of the scanner detected by the resonant frequency detector by the horizontal resolution of a display screen; oscillating at a pixel frequency corresponding to the multiplication result; generating a pulse corresponding to the pixel frequency by the oscillations and providing the pulse to the wave generator; in the waveform generator, generating a wave by adding the pulse to a wave; in the high voltage amplifier, amplifying the generated waveform; and in the scanner, scanning an image according to the amplified waveform.

According to another aspect of the present invention, there is provided an image resolution enhancing method of an image resolution enhancing apparatus having a scanner, a synchronous detector, a wave generator, a high voltage amplifier, and a resonant frequency detector, the method including: multiplying the resonant frequency of the scanner detected by the resonant frequency detector by the horizontal resolution of a display screen; oscillating at a pixel frequency corresponding to the multiplication result; generating a pulse corresponding to the pixel frequency by the oscillations; adding the generated pulse to a wave which is generated by the wave generator and amplified by the high voltage amplifier to obtain a composite waveform and providing the composite waveform to the scanner; and in the scanner, scanning an image according to the amplified wave.

According to another aspect of the present invention, there is provided an image resolution enhancing method of an image resolution enhancing apparatus having a scanner, a synchronous detector, a wave generator, a high voltage amplifier, and a resonant frequency detector, the method including: multiplying the resonant frequency of the scanner detected by the resonant frequency detector by the horizontal resolution of a display screen; oscillating at a pixel frequency corresponding to the multiplication result; generating a pulse corresponding to the pixel frequency by the oscillations; adding the generated pulse to a wave which is generated by the wave generator to obtain a composite waveform and outputting the composite waveform to the high voltage amplifier; in the high voltage amplifier, amplifying the composite waveform; and in the scanner, scanning an image according to the amplified wave.

### BRIEF DESCRIPTION OF THE DRAWINGS

The above and other features and advantages of the present invention will become more apparent by describing in detail exemplary embodiments thereof with reference to the attached drawings in which:
FIG. 1 is a block diagram of an image resolution enhancer according to an embodiment of the present invention;
FIG. 2 shows a pulse generated by a pulse generator according to an embodiment of the present invention;
FIGS. 3A through 3C show various composite waveforms generated by adding a pulse to triangle, square, and sine waves according to embodiments of the present invention and explain the improvement of an image resolution;
FIG. 4 is a block diagram of an image resolution enhancer according to another embodiment of the present invention;
FIG. 5 is a block diagram of an image resolution enhancer according to another embodiment of the present invention;
FIG. 6 is a flowchart of an image resolution enhancing method according to an embodiment of the present invention;
FIG. 7 is a flowchart of an image resolution enhancing method according to another embodiment of the present invention; and
FIG. 8 is a flowchart of an image resolution enhancing method according to another embodiment of the present invention.

### DETAILED DESCRIPTION OF THE INVENTION

Hereinafter, an image resolution enhancing apparatus according to the present invention will be described in detail with reference to the accompanying drawings in which embodiments of the invention are illustrated.

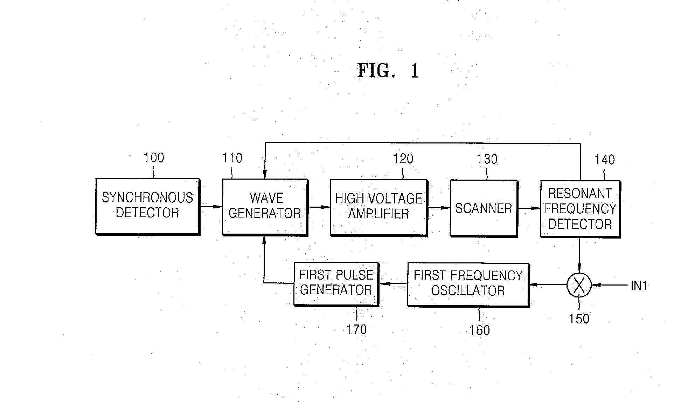

FIG. 1 is a block diagram of an image resolution enhancer according to an embodiment of the present invention. Referring to FIG. 1, the image resolution enhancer includes a synchronous detector 100, a wave generator 110, a high voltage amplifier 120, a scanner 130, a resonant frequency detector 140, a first multiplier 150, a first frequency oscillator 160, and a first pulse generator 170.

The synchronous detector 100 detects a horizontal synchronization signal of an image and outputs the detection result to the wave generator 110.

The wave generator 110 generates a triangle, square, or sine wave, adds a pulse received from the first pulse generator 170 to the triangle, square, or sine wave, and outputs to the high voltage amplifier 120 a composite waveform generated by adding the pulse to the triangle, square, or sine wave.

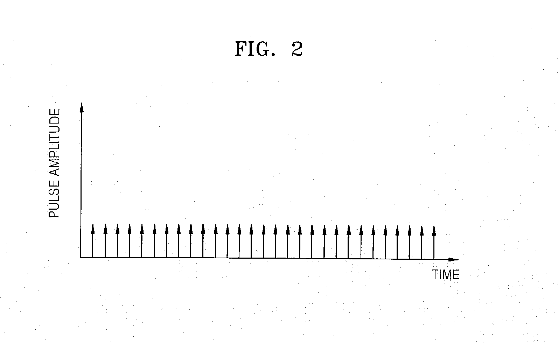

FIG. 2 shows a pulse generated by the pulse generator 170 according to an embodiment of the present invention. The period of the pulse is determined according to the frequency at which the first frequency oscillator 160 oscillates.

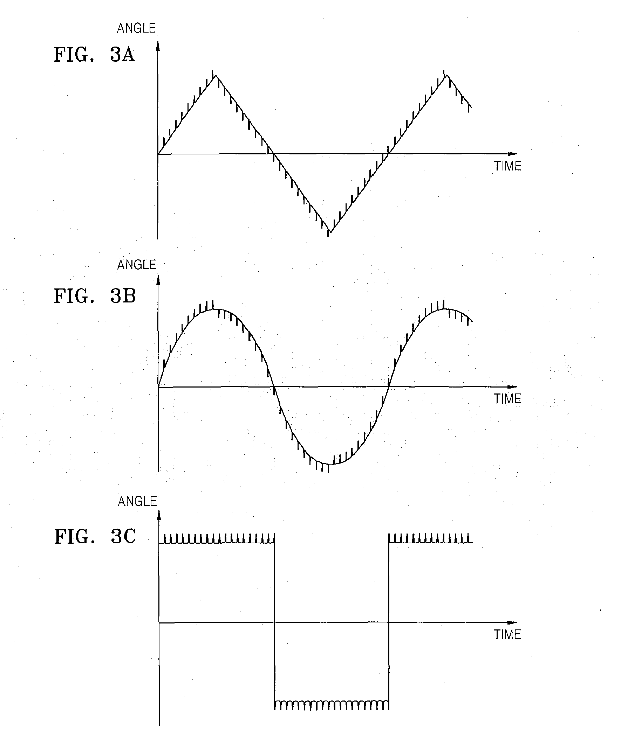

FIG. 3 shows various composite waveforms generated by adding a pulse to triangle, square, and sine waves according to embodiments of the present invention. A composite waveform generated by adding the pulse shown in FIG. 2 to the triangle wave is shown in FIG. 3A. A composite waveform generated by adding the pulse shown in FIG. 2 to the sine wave is shown in FIG. 3B. A composite waveform generated by adding the pulse shown in FIG. 2 to the square wave is shown in FIG. 3C. As shown in FIGS. 3A through 3C, the composite waveform generated by the wave generator 110 is different from an original wave. That is, while the original wave is the triangle, square, or sine wave which smoothly varies with time, the composite waveform according to an embodiment of the present invention has peaks due to the pulse which is added to the original wave. The image quality is improved due to the peaks when the scanner 130 scans the image.

The high voltage amplifier 120 amplifies the waveform generated by the wave generator 110 and outputs the amplification result to the scanner 130.

In particular, the high voltage amplifier 120 amplifies the composite waveform generated by the wave generator 110.

The scanner 130 scans the image to a display screen according to the waveform received by the high voltage amplifier 120.

When receiving the composite waveform shown in one of FIGS. 3A through 3C, the scanner 130 scans the image to the display screen according to the composite waveform. The scanner 130 scans the image to the pixels with reference to the peaks resulting from the added pulse, and therefore, the image is prevented from being scanned to areas between pixels. As a result, the quality of the image which is scanned according to the composite waveform is high relative to the quality of an image which is scanned conventionally.

The resonant frequency detector 140 detects the resonant frequency of the scanner 130 and outputs the detection result to the first multiplier 150.

The first multiplier 150 multiplies the resonant frequency of the scanner 130 detected by the resonant frequency detector 140 by the horizontal resolution of the display screen, which is input through an input terminal IN1, and outputs the multiplication result to the first frequency oscillator 160. The horizontal resolution of the display screen is the number of the pixels in a row of the display screen.

For example, when the resonant frequency is 25 KHz and the horizontal resolution is 400 pixels, the first multiplier 150 multiplies the resonant frequency of 25 KHz by the horizontal resolution of 400 [pixels] and outputs the multiplication result of 10,000 KHz.

The first frequency oscillator 160 oscillates at a pixel frequency corresponding to the multiplication result of the first multiplier 150 and outputs the oscillation result to the first pulse generator 170. For example, when receiving the multiplication result of 10,000 KHz from the first multiplier 150, the first multiplier 150 oscillates at the pixel frequency corresponding to the received multiplication result.

The first pulse generator 170 generates the pulse corresponding to the pixel frequency by the oscillations of the first frequency oscillator 160 and outputs the generated pulse to the wave generator 110. For example, the first pulse generator 170 can generate the pulse shown in FIG. 2. The period of the pulse is determined according to the frequency at which the first frequency oscillator 160 oscillates.

The wave generator 110 generates and outputs the composite waveform by adding the pulse received from the first pulse generator 170 to the triangle, square, or sine wave. When outputting the composite waveform from the high voltage amplifier 120 to the scanner 130, the scanner 130 outputs the image to the display screen according to the composite waveform.

The image resolution enhancer shown in FIG. 1 can be included in a display device in which an electrostatic capacity micro mirror is used as a scanner.

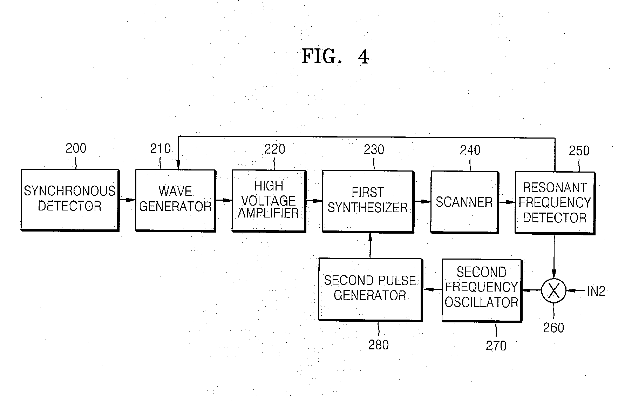

FIG. 4 is a block diagram of an image resolution enhancer according to another embodiment of the present invention. Referring to FIG. 4, the image resolution enhancer includes a synchronous detector 200, a wave generator 210, a high voltage amplifier 220, a first synthesizer 230, a scanner 240, a resonant frequency detector 250, a second multiplier 260, a second frequency oscillator 270, and a second pulse generator 280.

The synchronous detector 200 detects a horizontal synchronization signal of an image and outputs the detection result to the wave generator 210.

The wave generator 210 generates a triangle, square, or sine wave and outputs the generated wave to the high voltage amplifier 220.

The high voltage amplifier 220 amplifies the wave generated by the wave generator 210 and outputs the amplification result to the first synthesizer 230.

The first synthesizer 230 adds the pulse generated by the second pulse generator 280 to the wave amplified by the high voltage amplifier and outputs the composite waveform to the scanner 240. In particular, the first synthesizer 230 outputs the composite waveform generated by adding the pulse to the triangle, square, or sine wave.

For example, the first synthesizer 230 can generate one of the composite waveforms shown in FIGS. 3A through 3C. A composite waveform generated by adding the pulse shown in FIG. 2 to the triangle wave is shown in FIG. 3A. A composite waveform generated by adding the pulse shown in FIG. 2 to the sine wave is shown in FIG. 3B. A composite waveform generated by adding the pulse shown in FIG. 2 to the square wave is shown in FIG. 3C. The composite waveform generated by the fist synthesizer 230 has peaks resulting from the pulse which is added to the original wave. The peaks correspond to the pixels. The image quality is improved due to the peaks when the scanner 240 scans the image.

The scanner 240 scans the image to a display screen according to the composite waveform received from the first synthesizer 230. When receiving the composite waveform shown in one of FIGS. 3A through 3C, the scanner 240 scans the image to the display screen according to the composite waveform. The scanner 240 scans the image to the pixels with reference to the peaks resulting from the added pulse, and therefore, the image is prevented from being scanned to areas between the pixels. As a result, the quality of the image which is scanned according to the composite waveform is high relative to the quality of an image which is scanned conventionally.

The resonant frequency detector 250 detects a resonant frequency of the scanner 240 and outputs the detection result to the second multiplier 260.

The second multiplier 260 multiplies the resonant frequency of the scanner 240 detected by the resonant frequency detector 250 by the horizontal resolution of the display screen, which is input through an input terminal IN2, and outputs the multiplication result to the second frequency oscillator 270. The horizontal resolution of the display screen is the number of the pixels in a row of the display screen.

The second frequency oscillator 270 oscillates at a pixel frequency corresponding to the multiplication result of the second multiplier 260 and outputs the oscillation result to the second pulse generator 280. For example, when receiving the multiplication result of 10,000 KHz from the second multiplier 260, the second multiplier 260 oscillates at the pixel frequency corresponding to the received multiplication result.

The second pulse generator 280 generates the pulse having the pixel frequency in response to the oscillations of the second frequency oscillator 270 and outputs the generated pulse to the first synthesizer 230. For example, the second pulse generator 280 generates the pulse shown in FIG. 2.

When the first synthesizer 230 generates the wave by adding the pulse received from the second pulse generator 280 to the wave amplified by the high voltage amplifier 220 and outputs the composite waveform to the scanner 240, the scanner 240 outputs the image to the display screen according to the composite waveform.

The image resolution enhancer shown in FIG. 4 can be included in a display device in which an electrostatic capacity micro mirror is used as a scanner.

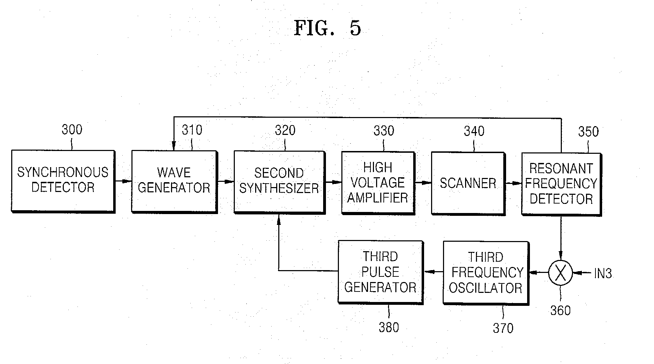

FIG. 5 is a block diagram of an image resolution enhancer according to another embodiment of the present invention. Referring to FIG. 5, the image resolution enhancer includes a synchronous detector 300, a wave generator 310, a second synthesizer 320, a high voltage amplifier 330, a scanner 340, a resonant frequency detector 350, a third multiplier 360, a third frequency oscillator 370, and a third pulse generator 380.

The synchronous detector 300 detects a horizontal synchronization signal of an image and outputs the detection result to the wave generator 310.

The wave generator 310 generates the triangle, square, or sine wave and outputs the generated wave to the second synthesizer 320.

The second synthesizer 320 adds a pulse generated by the third pulse generator 380 to the wave generated by the wave generator 310 and outputs the composite waveform to the high voltage amplifier 330. In particular, the second synthesizer 320 outputs the waveform generated by adding the pulse to the triangle, square, or sine wave.

For example, the second synthesizer 320 generates one of the composite waveforms shown in FIGS. 3A through 3C. A composite waveform generated by adding the pulse shown in FIG. 2 to the triangle wave is shown in FIG. 3A. A composite waveform generated by adding the pulse shown in FIG. 2 to the sine wave is shown in FIG. 3B. A composite waveform generated by adding the pulse shown in FIG. 2 to the square wave is shown in FIG. 3C. The composite waveform generated by the second synthesizer 320 has peaks due to the pulse which is added to the original wave. The peaks correspond to the pixels. The image quality is improved due to the peaks when the scanner 340 scans the image.

The high voltage amplifier 330 amplifies the composite waveform generated by the second synthesizer 320 and outputs the amplification result to the scanner 340.

The scanner 340 scans the image to a display screen according to the wave received from the high voltage amplifier 330. When receiving the composite waveform shown in one of FIGS. 3A through 3C, the scanner 340 scans the image to the display screen according to the composite waveform. The scanner 340 scans the image to the pixels with reference to the peaks resulting from the added pulse, and therefore, the image is prevented from being scanned to areas between pixels. As a result, the quality of the image which is scanned according to the composite waveform is high relative to the quality of an image which is scanned conventionally.

The resonant frequency detector 350 detects a resonant frequency from the scanner 340 and outputs the detection result to the third multiplier 360.

The third multiplier 360 multiplies the resonant frequency of the scanner 340, which is detected by the resonant frequency detector 350, by the horizontal resolution of the display screen, which is input through an input terminal IN3, and outputs the multiplication result to the third frequency oscillator 370. The horizontal resolution of the display screen is the number of the pixels in a row of the display screen.

The third frequency oscillator 370 oscillates at a pixel frequency corresponding to the multiplication result of the third multiplier 360 and outputs the oscillation result to the third pulse generator 380. For example, when receiving a multiplication result of 10,000 KHz from the third multiplier 360, the third multiplier 360 oscillates at the pixel frequency corresponding to the received multiplication result.

The third pulse generator 380 generates the pulse corresponding to the pixel frequency by the oscillations of the third frequency oscillator 370 and outputs the generated pulse to the second synthesizer 320. For example, the third pulse generator 380 can generate the pulse shown in FIG. 2.

When the second synthesizer 320 generates the waveform by adding the pulse received from the third pulse generator 380 to the wave amplified by the high voltage amplifier 330 and outputs the composite waveform to the scanner 340, the scanner 340 outputs the image to the display screen according to the composite waveform.

The image resolution enhancer shown in FIG. 5 can be included in a display device in which an electrostatic capacity micro mirror is used as a scanner.

Hereinafter, an image resolution enhancing method according to the present invention will be described in detail with reference to the accompanying drawings in which embodiments of the invention are illustrated.

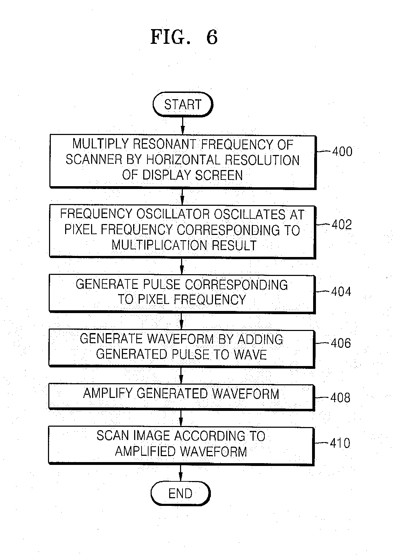

FIG. 6 is a flowchart of an image resolution enhancing method according to an embodiment of the present invention.

First, a resonant frequency detected by a resonant frequency detector is multiplied by a horizontal resolution of a display screen (operation 400). The horizontal resolution of the display screen is the number of the pixels in a row of the display screen.

After operation 400, a frequency oscillator oscillates at a pixel frequency corresponding to the multiplication result (operation 402). For example, when the multiplication result is 10,000 KHz, the frequency oscillator oscillates at the pixel frequency corresponding to the multiplication result.

After operation 402, a pulse corresponding to the pixel frequency, by the oscillations of the frequency oscillator, is generated and is output to a wave generator (operation 404). For example, the pulse shown in FIG. 2 can be generated. The period of the pulse is determined according to the frequency at which the frequency oscillator oscillates.

After operation 404, the wave generator generates a composition waveform by adding the pulse to a triangle, square, or sine wave, and outputs the composite waveform (operation 406).. FIG. 3 shows various composite waveforms generated by adding pulses to triangle, square and sine waves according to embodiments of the present invention. A composite waveform generated by adding the pulse shown in FIG. 2 to the triangle wave is shown in FIG. 3A. A composite waveform generated by adding the pulse shown in FIG. 2 to the sine wave is shown in FIG. 3B. A composite waveform generated by adding the pulse shown in FIG. 2 to the square wave is shown in FIG. 3C.

After operation 406, a high voltage amplifier amplifies the composite waveform generated by the wave generator (operation 408).

After operation 408, a scanner scans the image to the display screen according to the amplified wave (operation 410). When receiving the composite waveform shown in one of FIGS. 3A through 3C, the scanner scans the image to the pixels with reference to the peaks resulting from the added pulse, and therefore the image is prevented from being scanned to areas between pixels. Therefore, the quality of the image which is scanned in accordance with a composite waveform is high relative to the quality of an image which is scanned conventionally.

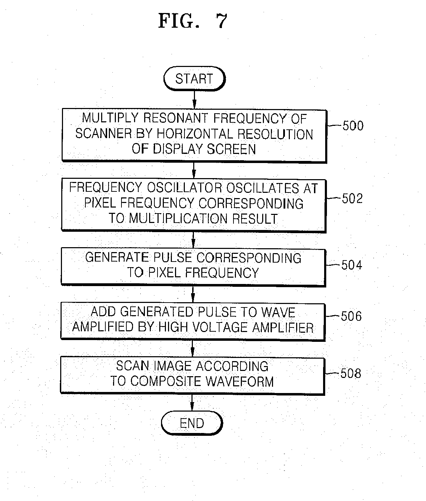

FIG. 7 is a flowchart of an image resolution enhancing method according to another embodiment of the present invention.

First, a resonant frequency detected by a resonant frequency detector is multiplied by the horizontal resolution of a display screen (operation 500). The horizontal resolution of the display screen is the number of the pixels in a row of the display screen.

After operation 500, a frequency oscillator oscillates at a pixel frequency corresponding to the multiplication result (operation 502). For example, when the multiplication result is 10,000 KHz, the frequency oscillator oscillates at the pixel frequency corresponding to the multiplication result.

After operation 502, a pulse corresponding to the pixel frequency, by the oscillations of the frequency oscillator, is generated and output to a wave generator (operation 504). For example, the pulse shown in FIG. 2 can be generated. The period of the pulse is determined in accordance with the frequency at which the frequency oscillator oscillates.

After operation 504, the pulse generated in operation 504 is added to a triangle, square or sine wave which is generated by the wave generator and amplified by a high voltage amplifier, and the resultant composite waveform is output to a scanner (operation 506).

FIG. 3 shows various composite waveforms generated by adding pulses triangle, square and sine waves according to embodiments of the present invention. A composite waveform generated by adding the pulse shown in FIG. 2 to the triangle wave is shown in FIG. 3A. A composite waveform generated by adding the pulse shown in FIG. 2 to the sine wave is shown in FIG. 3B. A composite waveform generated by adding the pulse shown in FIG. 2 to the square wave is shown in FIG. 3C.

After operation 506, the scanner scans the image to the display screen according to the composite waveform (operation 508). When receiving the composite waveform shown in one of FIGS. 3A through 3C, the scanner scans the image to the pixels with reference to the peaks resulting from the added pulse, and therefore, the image is prevented from being scanned to areas between pixels. As a result, the quality of the image which is scanned in accordance with a composite waveform generated by adding the pulse is high relative to the quality of an image which is scanned conventionally.

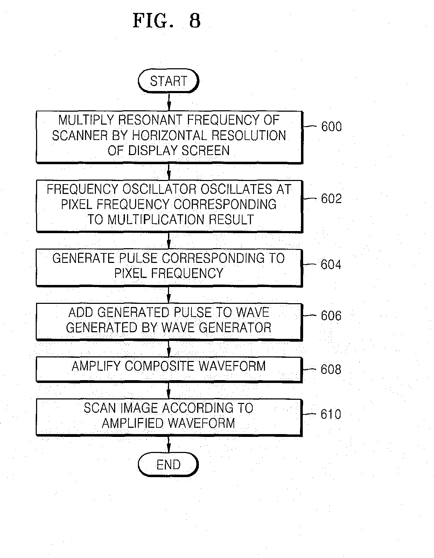

FIG. 8 is a flowchart of an image resolution enhancing method according to another embodiment of the present invention.

First, a resonant frequency detected by a resonant frequency detector is multiplied by the horizontal resolution of a display screen (operation 600). The horizontal resolution of the display screen is the number of the pixels in a row of the display screen.

After operation 600, a frequency oscillator oscillates at a pixel frequency corresponding to the multiplication result (operation 602). For example, when the multiplication result is 10,000 KHz, the frequency oscillator oscillates at the pixel frequency corresponding to the multiplication result.

After operation 602, a pulse corresponding to the pixel frequency is generated and output to a wave generator (operation 604). For example, the pulse shown in FIG. 2 can be generated. The period of the pulse is determined in accordance with the frequency at which the frequency oscillator oscillates.

After operation 604, the pulse generated in operation 604 is added to a triangle, square or sine wave which is generated by the wave generator to obtain a composite waveform (operation 606).

FIG. 3 shows various composite waveforms generated by adding pulses to triangle, square and sine wave according to embodiments of the present invention. A composite waveform generated by adding the pulse shown in FIG. 2 to the triangle wave is shown in FIG. 3A. A composite waveform generated by adding the pulse shown in FIG. 2 to the sine wave is shown in FIG. 3B. A composite waveform generated by adding the pulse shown in FIG. 2 to the square wave is shown in FIG. 3C.

After operation 606, the high voltage amplifier amplifies the composite waveform (operation 608).

After operation 608, the scanner scans the image to a display screen according to the amplified waveform (operation 508). When receiving the composite waveform shown in one of FIGS. 3A through 3C, the scanner scans the image to the pixels with reference to the peaks resulting from the added pulse, and therefore, the image is prevented from being scanned to areas between pixels. As a result, the quality of the image which is scanned in accordance with a composite waveform generated by adding the pulse is high relative to the quality of an image which is scanned conventionally.

The present invention can also be embodied as computer readable code on a computer readable recording medium. The computer readable recording medium is any data storage device that can store data which can be thereafter read by a computer system. Examples of the computer readable recording medium include read-only memory (ROM), random-access memory (RAM), CD-ROMs, magnetic tapes, floppy disks, optical data storage devices, and carrier waves. The computer readable recording medium can also be distributed over network coupled computer systems so that the computer readable code is stored and executed in a distributed fashion. Also, functional programs, code, and code segments for accomplishing the present invention can be easily construed by programmers skilled in the art to which the present invention pertains.

While the image resolution enhancer and the image resolution enhancing method according to the present invention have been particularly shown and described with reference to exemplary embodiments thereof, it will be understood by those of ordinary skill in the art that various changes in form and details may be made therein without departing from the scope of the present invention as defined by the following claims.

The image resolution enhancer and the image resolution enhancing method according to the present invention may improve the horizontal resolution by driving the micro-mirror of the scanner in consideration of the pixel frequency.

## Claims

1. An image resolution enhancing apparatus having a scanner (130), a synchronous detector (100), a wave generator (110), a high voltage amplifier (120), and a resonant frequency detector (140), the image resolution enhancing apparatus further comprising:
a first multiplier (150) for multiplying a resonant frequency of the scanner (130) detected by the resonant frequency detector (140) by the horizontal resolution of a display screen;
a first frequency oscillator (160) for oscillating at a pixel frequency corresponding to the multiplication result of the first multiplier (150);
a first pulse generator (170) for generating a pulse corresponding to the pixel frequency by the oscillations of the first frequency oscillator (160) and for providing the generated pulse to the wave generator (110),
wherein the wave generator (110) is arranged to add the pulse generated by the first pulse generator (170) to a wave generated by the wave generator to generate a composite waveform.

2. The image resolution enhancing apparatus of claim 1, wherein the wave generator (110) is arranged to generate the composite waveform by adding the pulse to a triangle, square or sine wave.

3. An image resolution enhancing apparatus having a scanner (240), a synchronous detector (200), a wave generator (210), a high voltage amplifier (220), and a resonant frequency detector (250), the image resolution enhancing apparatus further comprising:
a second multiplier (260) for multiplying the resonant frequency of the scanner (240) detected by the resonant frequency detector (250) by the horizontal resolution of a display screen;
a second frequency oscillator (270) for oscillating at a pixel frequency corresponding to the multiplication result of the second multiplier (260);
a second pulse generator (280) for generating a pulse corresponding to the pixel frequency by the oscillations of the second frequency oscillator (270); and
a first synthesizer (230) for adding the pulse which is generated by the second pulse generator (280) to a wave which is generated by the wave generator (210) and amplified by the high voltage amplifier (220) and for outputting the composite waveform to the scanner (240).

4. The image resolution enhancing apparatus of claim 3, wherein the first synthesizer (250) is arranged to output a composite waveform generated by adding the pulse to a triangle, square, or sine wave.

5. An image resolution enhancing apparatus having a scanner (340), a synchronous detector (300), a wave generator (310), a high voltage amplifier (330), and a resonant frequency detector (350), the image resolution enhancing apparatus further comprising:
a third multiplier (360) for multiplying the resonant frequency of the scanner detected by the resonant frequency detector (350) by the horizontal resolution of a display screen;
a third frequency oscillator (370) for oscillating at a pixel frequency corresponding to the multiplication result of the third multiplier (360);
a third pulse generator (380) for generating a pulse corresponding to the pixel frequency by the oscillations of the third frequency oscillator (370); and
a second synthesizer (320) for adding the pulse generated by the third pulse generator (380) to a wave generated by the wave generator (310) and for outputting the generated composite wave to the high voltage amplifier (330).

6. The image resolution enhancing apparatus of claim 5, wherein the second synthesizer (320) is arranged to output a composite waveform generated by adding the pulse to a triangle, square, or sine wave.

7. A display device using an electrostatic capacity micro mirror wherein the display device comprises image resolution enhancing apparatus according to any preceding claim.

8. An image resolution enhancing method performed in an image resolution enhancing apparatus comprising a scanner (130), a synchronous detector (100), a wave generator (110), a high voltage amplifier (120), and a resonant frequency detector (140), the method comprising:
(a) multiplying a resonant frequency of the scanner (130) detected by the resonant frequency detector (140) by the horizontal resolution of a display screen;
(b) oscillating at a pixel frequency corresponding to the multiplication result;
(c) generating a pulse corresponding to the pixel frequency by the oscillations and providing the pulse to the wave generator (110);
(d) in the wave generator (110), generating a waveform by adding the pulse to a wave.

9. A method according to claim 8, further comprising the steps of:
(a) in the high voltage amplifier, amplifying the waveform; and
(b) in the scanner, scanning an image according to the amplified waveform.

10. The method of claim 9 or 10, wherein step (d) comprises generating a composite waveform by adding the pulse to a triangle, square, or sine wave.

11. The method of any of claims 8 to 10 being performed in a display device using an electrostatic capacity micro mirror.

12. A computer program comprising computer program code means adapted to perform all the steps of any of claims 8 to 10 when said program is run on a computer.

13. A computer program as claimed in claim 12 embodied on a computer readable medium.
